## Europäisches Patentamt

## European Patent Office

## Office européen des brevets

(11) Publication number: **0 114 678**
**B1**

## EUROPEAN PATENT SPECIFICATION

(45) Date of publication of patent specification: **04.01.89**

(51) Int. Cl.⁴: **H 04 B 7/185,** H 04 J 3/06

(21) Application number: **84100566.3**

(22) Date of filing: **19.01.84**

(54) **Base-band equipment for earth stations of a time division multiple access satellite transmission system.**

(30) Priority: **21.01.83 IT 6706983**

(43) Date of publication of application:
**01.08.84 Bulletin 84/31**

(45) Publication of the grant of the patent:
**04.01.89 Bulletin 89/01**

(84) Designated Contracting States:
**DE FR GB NL**

(56) References cited:
**EP-A-0 053 399**
**US-A-3 879 580**
**US-A-3 987 250**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Alaria, Gian Battista**
**C.so Turati, 3**
**Turin (IT)**
Inventor: **Appiano, Silvano**
**Via Fonte Solforosa, 11**
**Montafia d'Asti (Asti) (IT)**
Inventor: **Destefanis, Paolo**
**P.za Adriano, 9**
**Turin (IT)**
Inventor: **Poggio, Cesare**
**C.so Raffaello 24**
**Turin (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Courier Press, Leamington Spa, England.

## Description

The present invention relates to TDMA (Time Division Multiple Access) satellite digital transmission systems, and in particular it concerns a base-band equipment for earth station terminals of such systems. Preferably, but not exclusively, the invention can apply to systems with on-board switching and memorization in the on-board switching unit.

The characteristics of TDMA terminals present in the earth stations for connection with telecommunications satellites are internationally defined by the most important authorities, such as Intelsat or Eutelsat, for satellites without on-board switching. International standards concern also the length of the frames transmitted, synchronization procedures, signalling etc.

On the contrary precise standards relevant to on-board equipment of satellites with on-board switching (SS/TDMA-Satellite Switched/TDMA) have not yet been prepared, and hence the characteristics of the corresponding terrestrial apparatus have not been defined yet. Moreover, in this case the switching network control procedure, i.e. the structure of devices searching for routing and processing the signalling must be also defined. In the field of the researches on SS/TDMA transmission systems, a more and more growing interest is in systems employing switching units with frame memorization, i.e. units comprising time-division switching stages besides space-division switching stages; this interest is due to the fact that such switching units assure greater overall system efficiency in terms of traffic to be handled by a given system structure.

In case of on-board switching with frame memorization, the devices searching for a routing through the switching network and processing the signalling are quite complex, and hence they can not be installed on board; at least one earth station (Master station) of a transmission system of the above-mentioned type must be equipped with such control devices, which cannot be inserted into existing TDMA- stations without modifying same.

As to frame length, it must be as short as possible, compatible with a good system efficiency, so as to reduce the complexity of on-board memory devices and relevant controls; such length might be rather inferior to the standardized length (2 ms) for TDMA systems without on-board switching.

Finally the presence of memory devices in the on-board switching unit renders the problems of synchronization between time "windows" allotted to the transmission (or reception) by the individual earth stations and the timing on said memory devices particularly serious.

Neither examples of terminals with base-band equipments suited to SS/TDMA systems nor modifications allowing standardized terminals to be used for these systems have been till now disclosed in the literature. Rather, a system as stated in the prior art portion of claim 1 has been published (US—A 3 879 580), where the satellite comprises an on-board processing repeater which handles the necessary signalling for time slot assignment, synchronization, information reformatting and so on. This system is not suitable for use also with a satellite communication system with on-board switching and on-board frame memorization, since in this case, as stated, the processing units have much more complex tasks and cannot conveniently be installed on board the satellite.

The aim of the invention is to provide base band equipment for the earth stations with means carrying out all processings necessary for a system of the above type.

Starting out from the above prior art, the present invention concerns a base-band equipment for earth stations of a time division multiple access satellite communication system, wherein the transmission from and towards stations which exploit common link towards the satellite which is equipped with on-board timing is organized in frames with fixed duration in which each station is allotted a time window subdivided into time slots allotted partly to service information and partly to actual traffic, the frame transmission to and reception from the satellite being controlled at each station by a first and a second timing system, the second system being slaved to on-board timing, and the base-band equipment for the earth stations comprising means, controlled by said first timing system, for inserting into the frames the information to be transmitted; means controlled by said second timing system for extracting the information from the frames received, and a control unit which is connected to the information inserting and extracting means and to the first timing system and which controls at least the operations relevant to the acquisition and maintenance of synchronism between the station it belongs to and the satellite; according to the invention, such equipment is characterized in that the means for inserting information into the frames comprise:

a first memory in which the control unit writes data indicating whether the different time slots in the transmission window of the station are allotted to service information or to traffic, and data relevant to the association between the traffic time slots and the various communications, said memory being cyclically read under the control of the first timing system;

a second memory, with storage capacity equal to a whole frame, wherein there is written in sequence, under the control of the first timing system, the information present on an input bus of the means inserting information into the frames, the reading consisting of addresses for said second memory consisting of the contents of said first memory;

a third memory storing at least the information relevant to the synchronization of the station with the satellite, supplied by the control unit, said third memory being written and read while the second memory is read or written respectively and being addressed during reading by said first memory;

and in that said means for extracting information from the frames comprise:

a fourth memory wherein the control unit writes data indicating whether the various time slots within the reception window are allotted to service information or to traffic, and data relevant to the association between the various communications and the traffic time slots, said fourth memory been sequentially read under the control of said second timing system;

a fifth memory, with storage capacity equal to a frame, which stores, at addresses represented by the contents of said fourth memory, the information to be presented on an output bus of the information extracting means, the contents of the fifth memory being sequentially read under the control of the second timing system;

a sixth memory which stores, at addresses supplied by the fourth memory, service information which is to be processed by the control unit, said sixth memory being written during the phases in which the fifth memory is read, and being read during the phases in which the fifth memory is written.

For a better understanding reference is made to the annexed drawings, which relate to the most general case of an SS/TDMA communications system with frame memorization in the on-board switching unit, and in which

Fig. 1 shows the general structure of a communications system via satellite wherein the invention is applied;

Fig. 2 shows the organization of the frames transmitted from and to the earth stations;

Fig. 3 and 4 show the exchange of signalling and synchronism signals among earth stations and among said earth stations and the satellite;

Fig. 5 shows the structure of the base-band equipment for a master station;

Fig. 6 shows the structure of the base-band equipment for a traffic station;

Fig. 7 and 8 are diagrams relevant to the synchronism acquisition and maintenance, respectively for the master station and for a traffic station.

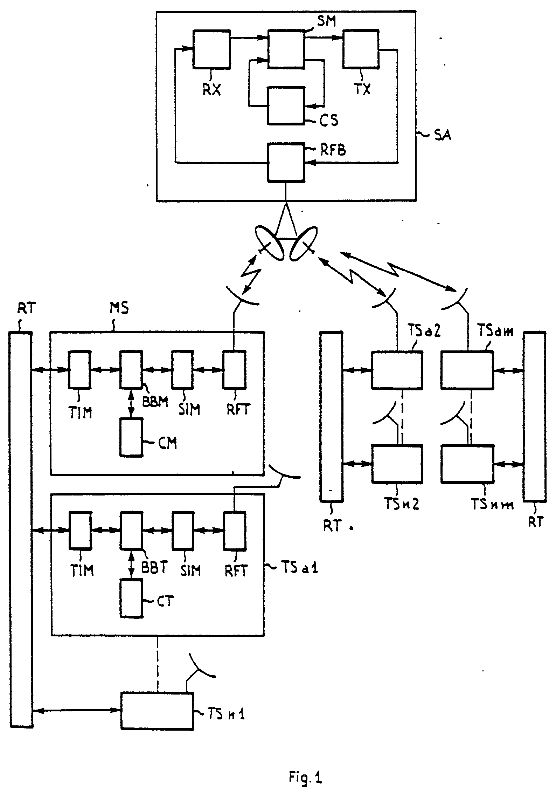

As shown in Fig. 1, in an SS/TDMA transmission system, satellite SA serves a plurality of geographical areas each generally comprising a plurality of earth stations, interfacing the satellite transmission system with a terrestrial telecommunications network.

At least one of these stations, denoted by MS, is a master station which, in case of a satellite with on board switching and frame memorization, performs as a system reference and in addition is to control on-board switching (in particular to search for routing).

The other stations TSa1 ... TSn1; TSa2 ... TSn2, TSam ... TSnm are traffic stations, i.e. they have no control tasks. Inside the same geographical area the different stations communicate with the satellite through a common time division link and transmit and receive frames whose structure will be investigated hereinafter.

The earth stations have the same general organization, and comprise a base band unit (BBM for the master station MS or BBT for a traffic station) associated with a control unit CM or CT respectively, and a radio-frequency unit RFT, which modulates the signals for transmission towards satellite SA or demodulates the signals coming from the satellite.

Base-band unit BBM (BBT), which with the control unit forms the equipment according to the invention, is to form the frames to be transmitted using the data coming from a terrestrial network RT and service information supplied by control unit CM (CT), and to interpret the frames coming from the satellite. Units BBM, BBT are connected to the lines for communication with the terrestrial network by a device TIM which adapts standardized data flows present on said lines to the station requirements, and vice versa, and recovers a periodic drift due to timing shifts between terrestrial network and satellite as well as periodic drift due to Doppler effect. Unit BBM, BBT are further connected to radiofrequency unit RFT by a device SIM, which effects the codings and decodings required by radio frequency radiofrequency transmission modalities.

Devices SIM, TIM and RFT are not part of the present invention and since they are conventional will not be described in detail. Control unit CT for traffic stations is to insert and extract information into and from the frames, to acquire and maintain the station synchronism and to manage the equipment (initialization and alarms).

Control unit CM of a master station has functions similar to those of control unit CT of traffic stations, although slightly more complex, because a master station acts as a system reference, and moreover it is to control switching on-board the satellite SA.

On board the satellite there are a radio frequency unit RFB, corresponding to earth unit RFT, devices RX and TX for synchronizing the serial flows received from the earth station and vice versa, and switching unit SM, e.g. of TST type, i.e. with time division stages T and space division stages S.

Unit SM is associated with a control device CS, which executes the switching commands coming from control unit CM of the master station.

As to frame length, taking into account the presence of memorization devices on board the satellite, a period of 500 µs (i.e. a period equal to the period of four 125 µs PCM frames) has been considered convenient.

Each channel in the frame from and towards the satellite can be then composed of four PCM samples, totalling 32 bits. The number of channels in the frame depends on the desired transmission rate. In the exemplary embodiment here described reference will be made to two different rates, namely 131 Mbit/s (or more precisely 131.072 Mbit/s) and 33 Mbit/s (32.768 Mbit/s).

The first rate allows 2,048 PCM channels at 64 kbit/s to be transmitted, while 512 channels can be transmitted at the second rate. The rate of each station and the channel allotment obviously depend for each station on the traffic needs. The stations that communicate with the satellite through the common link must operate at the same rate.

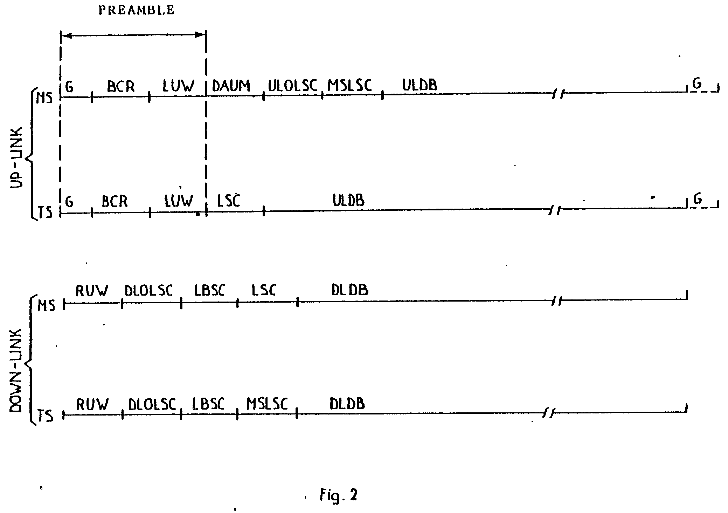

Fig. 2 shows a possible organization of the bursts emitted by an earth station and by the satellite, the bursts from and towards a master station (MS) and from and towards a traffic station (TS) being represented separately.

The bursts towards the satellite (up-link) comprise a fixed preamble, having a length not exceeding 512 bits and consisting of:

an initial guard time G, necessary to take into account transients due to the switching on of the station and to compensate for phase shifts due to the satellite movements and to drifts of the clock signals;

a pattern BCR for bit carrier recovery;

a synchronization pattern LUW (local unique word) typical of the emitting station.

The preamble is followed by a part whose length is different for the different stations and can be possibly modified for a given station upon variations of its traffic needs, that part contains control data and traffic ULDB.

As to master station MS, the control data concern the whole system and comprise:

a pattern DAUM representing the commands for switching unit SM on board the satellite; said pattern will serve both in the initialization phase to duly configure the on board-control unit CS, and during the regular service to set up new connections; pattern DAUM will not be significant in the case where one new connection is to be set up;

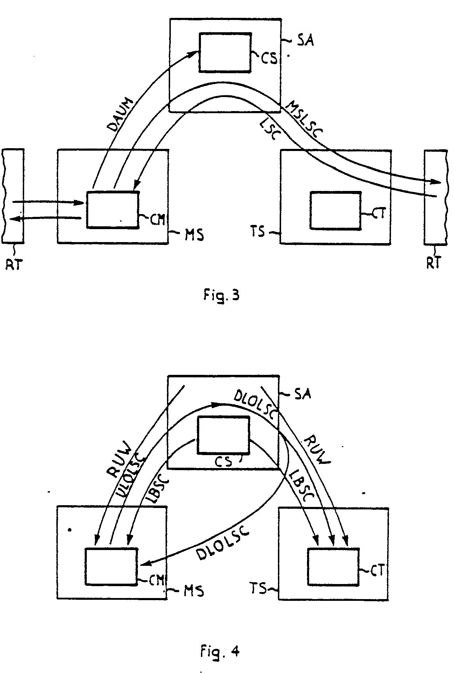

a synchronization pattern ULOLSC which contains the information relevant to the distance (defined for instance in terms of propagation time) between the master station and the satellite, and antenna pointing data; said pattern is then broadcast by the satellite to all the earth stations (pattern DLOLSC) as will be seen also in Fig. 4;

a pattern MSLSC which contains the signalling between the master station and a generic traffic station relevant to the set up and the release of the connection; this signalling is allotted suitable input and output channels, fixedly associated, in switching unit SM.

Control data emitted by traffic stations comprise a signalling pattern LSC, which has the same meaning as MSLSC, but is relevant to the opposite direction; LSC is handled on board as MSLSC.

In the transmission from the satellite toward the earth stations there is a single transmitter and a plurality of receivers and in addition, the timing controlling earth reception is locked to satellite timing; thus, no problems arise relating to the alternance of the stations, carrier loss or the like, and consequently the preamble and the guard times are no longer necessary.

The frames towards earth (down-link) begin with a synchronisation word RUW, which identifies the beginning of a frame and is sent to all the stations, and with pattern DLOLSC, already defined.

For each frame and for each station there are also provided:

a pattern LBSC which identifies the actual instant at which reception on board the satellite of a burst emitted by the station begins (e.g. said instant is defined in terms of distance between the beginning of a frame received on board and the reception of the word LUW of that station); said pattern allows the earth station to maintain its synchronism in the frame, i.e. to recover phase shifts due to satellite displacement;

signalling patterns LSC, for the main station, or MSLC for traffic stations (see Fig. 3), already defined for the bursts towards the satellite;

traffic DLDB.

As already mentioned, all these patterns or information are organized into 32-bit groups, i.e. each of them entirely occupies one or more channels in the frame.

The arrangement of the control data in the bursts, here represented, is the most preferred arrangement, but different organizations are possible; obviously the structure of the variable part of the frame will be established during the initialization and will then be maintained during regular service.

Figures 3, 4 clearly show the paths of signalling and synchronization patterns. In particular, line signalling MSLSC or LSC is processed only in control unit CM of the master station, and it passes unchanged through the satellite and the traffic station involved; control pattern DAUM is sent by the master station to the synchronization information (pattern ULOLSC) is sent by the master station through the satellite to all the other stations. For simplicity sake the patterns contained in the preamble are not shown in Fig. 4.

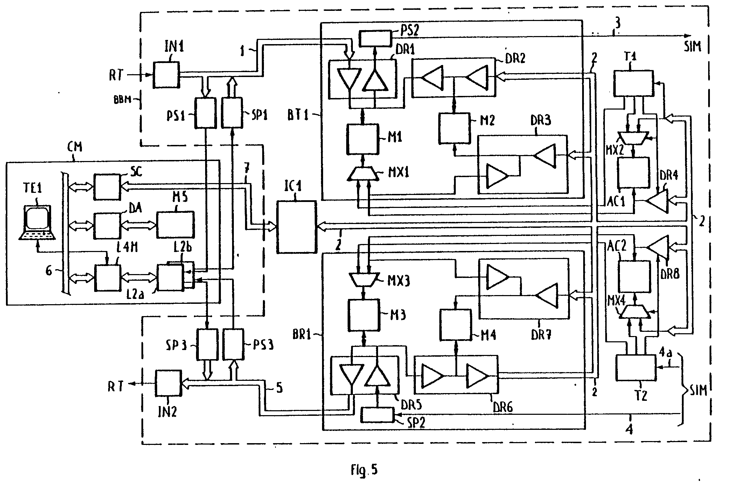

In Fig. 5, base-band unit BBM of a master station MS (Fig. 1) comprises two separate and complementary sections, which basically have the same structure and are designed for the transmission towards or respectively reception from the satellite. The two sections are connected to control unit CM through an interface IC1 which on the one side communicates with the control unit in an asynchronous way (i.e. at the instants in which such a unit is available for the operations requiring signal transfer to the transmitting section or signal reception from the receiving section) and on the other side communicates with the transmitting or receiving section synchronously with the timings of said sections. Devices such as IC1 are well known to the person skilled in the art.

The separation among the two sections is necessary· because the transmitting section is controlled by a timing generated inside the station (or obtained from the terrestrial network) while the receiving section timing is slaved to a timing extracted from the data flow coming from the satellite and hence is affected by periodical variations due to Doppler effect. Owing to the similarity of the two sections, only one of them (for instance the transmitting section) will be described in detail.

The transmitting section is connected to block TIM (Fig. 1) through a first interface circuit IN1 which receives the information emitted from the terrestrial network (speech, data and so on) already partly multiplexed in TIM (e.g. so as to form serial flows at 16 Mbit/s obtained by multiplexing 8 PCM groups at 2 Mbit/s) and transfers a 64 kbit/s parallel flow onto a bus 1.

Interface IN1 consists of one or a plurality of equal elements depending on the station capacity: e.g., in case the whole 500 μs frame is assigned to the station, 8 elements like IN1 are provided, each of them receiving one of said serial flows at 16 Mbit/s.

The parallel flow on bus 1 consists of 32-bit groups, relevant to four subsequent samples of one of the transmissions at 2 Mbit/s incoming to TIM (Fig.1).

Bus 1 is connected both to a transmission buffer BT1 to which it sends the actual information, and to a first serializer PS1. The content of a 64 Kbit/s channel, allotted to the signalling coming from RT (Fig. 1), which is to be processed by CM (e.g. seizure, selection, release, etc. in case of speech channels), is extracted from the bus and sent to control device CM through PS1. Conversely a series-to-parallel converter SP1 allows the insertion on the bus of signalling (MSLSC) to be sent to the traffic station. Converter SP1 will comprise as many units as there are traffic stations.

Transmission buffer BT1 comprises two random access memories M1, M2.

The first memory, M1, has such a capacity as to store a whole frame to be sent to the satellite (in particular, in the example considered, the contents of the 64 channels at 2 Mbit/s entering MS, Fig. 1). The data present on bus 1 are sequentially written into M1, upon command of a time base T1, and are read upon command of an address converter AC1 so as to take into account the configuration of the frames sent towards the satellite. Advantageously memory M1 is divided into two sections which are alternatively read and written. More particularly, half the time allotted to each channel in the 131 Mbit/s frame will be allotted to the writing into M1 and the other half to the reading. Suitable driving circuits DR1 alternatively enable writing and reading in memory.

A multiplexer MX1 supplies M1 with the writing addresses coming from T1 or with the reading addresses supplied by AC1.

Memory M2, whose capacity is much smaller than that of M1 is to store the information relevant to system synchronization (preamble, ULOLSC) and to the switching control (DAUM).

Said information is processed in CM and is supplied to M2 through interface IC1 and a bus 2. M2 is written during the time periods in which M1 is read, while reading takes place at the instants in which, given the frame structure, the information stored in M2 is to be transmitted. The write and read addresses for M2 are supplied by control unit CM and by AC1, respectively. Suitable driving circuits DR2, DR3 respectiwely allow the alternance between reading and writing in M2 and the addressing by CM or AC1.

The outputs of M1, M2 are connected to another serializing device PS2 for sending serial frames to SIM (Fig. 1) through connection 3. For instance, where the transmission towards the satellite takes place with 4 phase PSK modulation, PS2 comprises two elements which supply the in-phase and the quadrature flow, respectively.

Address converter AC1 basically consists of a programmable read only memory in which the writing is controlled by CM, still through IC1 and bus 2, during the initialization phase or when a system reconfiguration is necessary.

On the contrary the reading is controlled by time base T1. A multiplexer MX2 supplies AC1 with the reading or writing addresses. To allow the writing in AC1 during the station operation (system reconfiguration), a portion of the frame (e.g. a time slot) will be allotted to such operations, and during this time MX2 is switched by T1 so as to let through the addresses supplied by IC1. The same signal which causes the switching of MX2 is supplied to a driving circuit DR4 enabling the writing in AC1. Of course by this arrangement the reconfiguration will take place at a rate of an address per frame, and during the time slot allotted to the reconfiguration the station transmitters are disabled.

AC1 also supplies a signal which identifies the transmission window of that station; i.e. the allocation of the whole burst emitted by the station in the frame.

This is necessary when the station is not the single user of the frame, i.e. when there is actually a time division access. Such a signal can be directly sent to the modulator in RFT (Fig. 1).

Timing circuit T1 is also connected to control device CM by which T1 can be adjusted when the information supplied by the satellite (in particular signal LBSC) indicates that, owing to the satellite movements, the transmission window allotted to the station of which T1 is a part has undergone a shift such as to cause superposition among adjacent bursts in the frame.

The receiving section is complementary to the transmitting section.

A reception buffer BR1 receives the serial information flow from SIM (Fig. 1) through a connection 4 and serial-to-parallel converter SP2 and transfers such information as a parallel flow into bus 5. BR1 comprises memories M3, M4, analogous to M1, M2 and associated with multiplexers MX3, MX4 and driving circuits DR5, DR6, DR7, DR8, analogous to MX1, MX2, DR1 — DR4. Upon command of address converter AC2, the information contained in the channels allotted to traffic (DLDB) and line signalling (LSC) is written in M3 and the synchronization information (DLOLSC, LBSC), to be made available to CM, is written in M4. The information stored in M3 is read upon command of a time base T2, driven in known manner through a wire 4a by a device for recognizing the synchronization pattern down link frame (word RUW); said device is part of block SIM.

Bus 5 is also connected to interface IN2, which has complementary tasks to IN1; to parallel-to-series converter PS3, which extracts from the bus and sends CM signalling LSC; and to series-to-parallel converter SP3, which sends on to the bus the signalling to be sent to terrestrial network RT (Fig. 1). Also PS3, like SP1 will comprise as many units as there are traffic stations.

Control unit CM comprises: devices L2a, L2b implementing the functions of level 2 of a standard signalling protocol (e.g. protocol CCITT N. 7); a device L4M managing level 4 of the same protocol; a processing device DA, associated with a memory M5 which contains the information on the state of the switching network; a device SC handling synchronization and sending commands to the satellite. Devices L4M, DA, SC are connected to an internal bus 6 of the control unit.

The devices managing level 2 of the protocol comprise at least a unit L2a connected to PS1 and SP3 for processing the signalling coming from or addressed to the terrestrial network and a unit L2b for each of the pairs SP1 — PS3 (i.e. for each traffic station), which processes the signalling to be sent to or received from the traffic stations (patterns MSLSC, LSC respectively). Such devices are basically to introduce control bit patterns (for instance, redundancy codes for protecting some information, e.g. pattern DAUM) into the sequences to be sent onto buses 1, 5, and to check the formal correctness of the information extracted from said buses, in order to forward such information to L4M (if correct) or to request retransmission thereof, in case of an error.

Devices such as L2a, L2b are well known in the technique and hence a detailed description is unnecessary.

Device L4M on one side interprets the signalling coming from the terrestrial network or from other stations and necessary for the connection management, and supplies DA with the relevant information, and on the other side it sends towards the other stations or the terrestrial network the signallings processed in DA, still relevant to the connection management.

In addition, L4M is connected to a terminal TE1 through which an operator can introduce into unit BBM the information necessary to initialize or reconfigure the system or monitor the station operation. Devices performing as L4M are well known in the art and hence a detailed description is not necessary.

Device DA is basically to search for routing through switching unit SM (Fig. 1) on board satellite SA. For this search DA uses the connection data supplied by L4M and the information on the busy-state of the channels incoming to and outgoing from SM, said information being stored in M5; if the connection cannot be established DA signals the congestion to the station originating the call. The procedures followed by DA for the search of a route are basically similar to those of the control units of any TST connection network and hence will not be described in detail.

Connection commands (DAUM) emitted by DA are sent to device SC which encodes them according to a code with high protection against errors (e.g. GOLAY code).

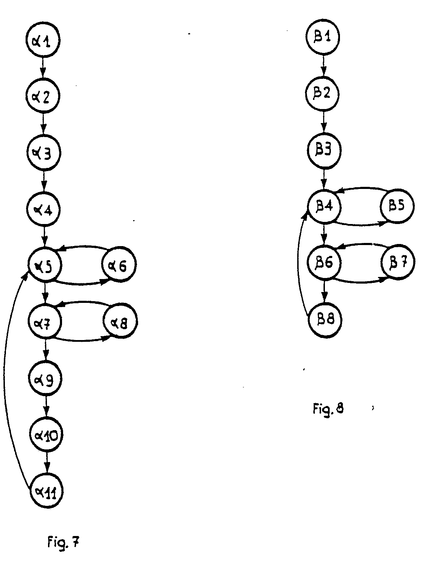

In addition SC is to generate the synchronization patterns (BCR, LUW, ULOLSC) to be inserted into the frames to be sent to the satellite and to recognize the synchronization patterns present in the frames arriving from the satellite (RUW, DLOLSC, LBSC). The operations concerning synchronism acquisition and maintenance will be examined during the description of the system operation with reference to the diagram of Fig. 7.

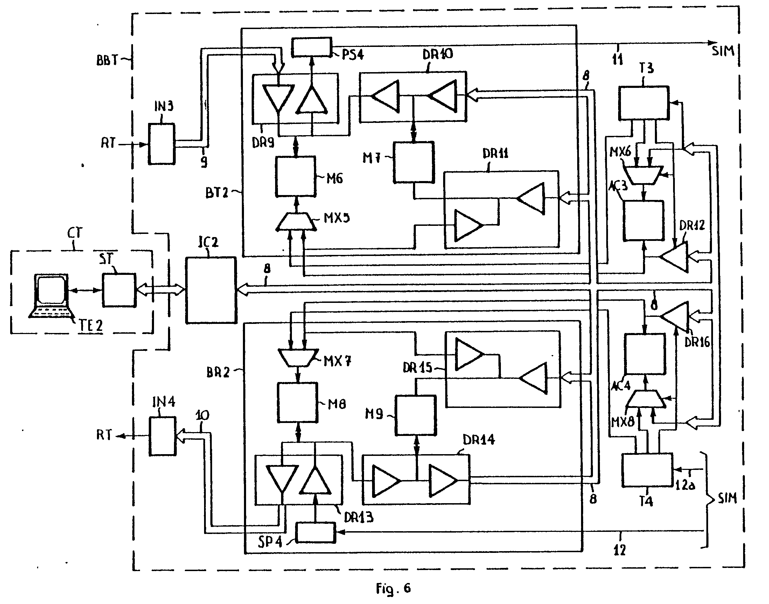

With reference to Fig. 6, base-band unit BBT for a traffic station is similar to unit BBM of the master station and comprises distinct transmitting and receiving sections connected to the control unit through interface IC2.

In said Figure blocks BT2, BR2, T3, T4, AC3, AC4, DR9—DR17, MX4—MX6, M6—M9 carry out the same functions as BT1, BR1, T1, T2, AC1, AC2, DR1—DR8, MXI—MX3, M1—M4.

Memory capacity, with frame length unchanged, depends on the transmission rate chosen for the station; for instance, if the traffic station operates at 33 Mbit/s, a memory for 512 channel instead of one for 2048 channels will be sufficient. Timing signals too will depend on the rate chosen.

Receiving and transmitting sections are connected through bus 8 to interface IC2, which has the same tasks as IC1, through buses 9, 10 to devices IN3, IN4, similar to IN1, IN2, and through connections 11, 12, 12a to device SIM (Fig. 1).

Control unit CT of the traffic station must only process synchronization information and hence it sends or receives all the necessary information (preamble during transmission, patterns RUW, DLOLSC, LBSC during reception) through interface IC2, bus 8 and memories M7, M9.

Signalling patterns LSC, MSLSC are transferred unchanged towards the satellite or the terrestrial network, i.e. they are handled exactly like the actual information.

Consequently CT comprises in addition to terminal TE2 (analogous to TE1) for introducing into the apparatus the information necessary to the operation of the station or for monitoring such operation a device ST for generating and recognizing synchronization patterns. ST incorporates also the devices organizing such patterns in the format required by the protocol.

The operations relevant to the attainment of synchronism of the traffic station will be illustrated in the operation description, with reference also to the diagram of Fig. 8. To make Figures 5 and 6 simpler the timing signals for the various devices of the equipment have been omitted as they are not essential to the understanding of the invention.

The operation of the equipment is as follows.

When the system is put into service, the data necessary for the correct operation (frame structure, length of the bursts of the various stations, position with respect to the satellite, association of input/output channels of SM, Fig. 1, with the various up and down links etc. . . .) are loaded in the equipments through terminals TE1, TE2 (Figs. 5, 6). In this way, i.a., memories AC1 — AC4 are programmed. Besides, the general system synchronism and that of the various traffic stations is to be acquired, with the procedures represented in Fig. 7 for the master station and in Fig. 8 for traffic stations.

For the master station, initial state α1 is a state of waiting for the satellite availability, which state is left when the satellite sends a suitable code signalling such availability. When such a code is received the master station sends the preamble (state α2: sending of the system master clock) in order to allow the satellite to synchronize itself, and waits for the synchronization (state α3).

The waiting time is the sum of the time necessary for the preamble to arrive at the satellite and for the response to arrive at the earth station. Such a response is contained in pattern RUW.

Subsequent state α4 (satellite configuration) corresponds to supplying the satellite with the information relevant to transmission and reception windows of the various stations, as well as to the frame organization. At this point the master station must check whether its burst is locked within the frame (state α5) using sequence LBSC.

If it is not, timing system T1 is to be adjusted (state α6) and after each correction the occurred locking within the frame is to be checked.

If the burst was locked, or when the locking has been obtained, check and correction are repeated for a multiframe, i.e. every n frames (states α7, α8); when the locking has been obtained also within the multiframe the satellite position is measured with respect to the master station (state α9) and position data, i.e. the sequence ULOLSC (state α10), are sent to the satellite.

The synchronization of the master station (α11) is thus reached and it is possible to go on with the synchronization of the traffic stations.

For said stations the initial state (β1) is to wait for the synchronism of the master station; when the attainment of said synchronism is acknowledged (through pattern RUW), the distance of the station to the satellite is calculated (state β2) by exploiting signalling DLOLSC as well as the geographical coordinates of the traffic station with respect to the master station.

At the end of the computation the station is ready to insert its bursts into the frame, which is obtained by sending the preamble (state β3); afterwards the frame and multiframe locking is checked (β4, β6) and when the check and the possible corrections (β5, β7) are over, the station has reached its synchronization state (β8); consequently the system is in steady state.

The operations of states α5 — α11 and β4 — β8 are periodically repeated to maintain steady-state synchronism. Besides, states α3 — α5, α7 — α11 and β3, β4, β6, β8 are left for an alarm state, not shown, when the conditions which allow the passage to the subsequent state do not occur.

To describe the steady-state operation a call will be now investigated in detail, which call is supposed to originate from a subscriber connected to MS through its terrestrial network, and to be addressed to a subscriber connected to TSam (Fig.1).

Unit BBM of station MS receives seizure and dialling signals through a suitable channel of the PCM lines for connection with the terrestrial network.

Said signallings are extracted in the suitable time phases from bus 1 through PS1, and are supplied to L2a, which checks whether they are correct; in the affirmative L2a forwards them to L4M. Depending on the origin of the call, L4M must decide the up-link involved in the call, the channel assigned out of 2048 possible channels (supposing a transmission at 131 Mbit/s) and the down-link to the destination station.

Said three data are supplied from L4M to DA and are sufficient to start the route search.

First, by exploiting these data and the channel occupation map stored in M5, DA searches in the memory whether free channels exist in the down-link towards TSam (Fig. 1). If no free channels exists (group congestion), the situation is communicated to L4M which organizes the information in the desired format and through L2a and SP3 sends it to the exchange originating the call. If on the contrary there is a free channel in the down-link, DA searches if there is a path inside SM which is free and is not being seized by other calls in order to connect the input and output involved in that call. That search is made by using the information stored in M5. If there are no available paths, the congestion due to the switching unit is signalled, following the same procedure as for the group congestion. If on the contrary a connection path between input and output is found DA searches with the same modalities whether the backwards connection between TSam and MS can be established.

Supposing that the bidirectional connection can be established, DA updates M5 and generates two messages: the first message contains the information about the down-link channel and is sent to L4M which through L2b and SP1 introduces said message into the information flow present on bus 1; hence through memory M1 and the serializer PS 4 the message is sent to SIM, RFT (Fig. 1) and then to the satellite.

The other message contains the switching command (DAUM) specifying the up and down links, the up-link and down-link channels and the timeslots inside the switching unit for the forward and backwards connection. This command is sent from DA to SC, which suitably encodes it and through IC1 (IC2) and bus 2 (8) updates the suitable position M2 (M7).

Once the connection in SM is actually established, traffic information ULDB, DLDB can flow between the two stations.

Frame by frame, as mentioned, traffic information ULDB, DLDB and the possible line signalling are stored in M1, M8 or M6, M3 respectively, according to the propagation direction, and the service information is stored in M2, M9 or M7, M4 respectively.

When the release is requested, the relevant signalling is extracted from the information flow and supplied to L4M through PS1, L2a (if the release has been requested by the calling party, connected to MS) or through PS3 and L2b (if the release has been requested by the called party and then the relevant signalling has been sent by TSam to MS). L4M extracts from the release request the information on the up-link and the up-link channel, and gives the relevant data to DA. DA updates memory M5, making again available the up-link and down-link channels and the path inside switching unit SM; the occurred release is communicated by L4M to the originating exchange.

It is to be noted that for the release no communication is sent to unit CS, whose state will be modified only by a message DAUM relevant to a new communication.

If the call were originated by an exchange connected to a traffic station and not to the master station, the procedure, which is always implemented in the master station, is identical, with the only exception that the signalling to be processed in CM is supplied via satellite through units PS3 and L2b associated with that station and not through PSI and L2a; the same takes place for the signalling emitted by CM.

The preceding description has been effected under the simplifying hypothesis that all communications have the same band occupation, and that each communication is allotted a channel in the frame. Yet the described structure holds good without modifications also in the case in which the stations process communications which require different band occupations (e.g. data transmission, for instance at n × 64 kbit/s, and video-signal transmission, for instance video conference at 2 Mbit/s); the routing control unit must allot the wider-band communications a greater number of channels (contiguous or non-contiguous, according to traffic conditions and to the possibility of varying the channel allotment communication by communication) and must generate switching commands for individual channels or even for channel blocks.

From the preceding description the flexibility of the equipment according to the invention is evident. Even if the invention has been described for a system with time switching stages on board the satellite and control from the earth, it can apply, by suitable simplifications or modifications, also to systems without on-board switching or with space switching units only.

Obviously in the first case the devices for route search are unnecessary, only the devices for the synchronism control and possibly for the processing of signalling being provided (i.e. in the most simple case the control device of all the stations will have the structure described here for traffic stations).

Besides, by suitable modifications of the programs of the control units, also the channel allotment to the various earth circuits can be dynamically effected, i.e. the channels will be allotted only when the circuits are active and so as to take into account the destination.

**Claims**

1. Base-band equipment for earth stations of a time division multiple access satellite communication system, wherein the transmission from and towards stations which exploit a common link towards the satellite which is equipped with on-board timing is organized in frames with fixed duration in which each station is allotted a time window subdivided into time slots partly allotted to service information and partly to actual traffic, the frame transmission to and reception from the satellite being controlled at each station by a first (T1, T3) and a second (T2, T4) timing system, the second system being slaved to on-board timing, and the base-band equipments for the earth stations comprising means (BT1, BT2, AC1, AC3, PS2, PS4) controlled by said first timing system (T1, T3) for inserting into the frames the information to be transmitted, means (BR1, BR2, AC2, AC4, SP2, SP4) controlled by said second timing system (T2, T4) for extracting the information from the frames received, and a control unit (CM, CT) which is connected to the information inserting and extracting means and to the first timing system (T1, T3) and which controls at least the operations relevant to the acquisition and maintenance of synchronism between the station it belongs to and the satellite, characterized in that the means (BT1, BT2, AC1, AC3, PS2, PS4) for inserting information into the frames comprise:

a first memory (AC1, AC3) in which the control unit (CM, CT) writes data indicating whether the different time slots in the transmission window of the station are allotted to service information or to traffic, and data relevant to the association between traffic time slots and the various communications, said memory being cyclically read under the control of the first timing system (T1, T3);

a second memory (M1, M6) with storage capacity equal to a whole frame, wherein there is written in sequence, under the control of the first timing system (T1, T3), the information present on an input bus (1, 9) of the means (BT1, BT2, AC1, AC3, PS2, PS4) inserting information into the frames, the reading addresses for said second memory (M1, M6) consisting of the contents of said first memory (AC1, AC3);

a third memory (M2, M7) storing at least the information relevant to the synchronization of the station (MS, TSa1 ... TSnm) with the satellite, supplied by the control unit (CM, CT), said third memory (M2, M7) being written and read while the second memory (M1, M6) is read or written respectively and being addressed during reading by said first memory (AC1, AC3);

and in that said means (BR1, BR2, AC2, AC4, SP2, SP4) for extracting information from the frames comprise:

a fourth memory (AC2, AC4) wherein the control unit (CM, CT) writes data indicating whether the various time slots within the reception window are allotted to service information or to traffic, and data relevant to the association between the various communications and the traffic time slots, said fourth memory (AC2, AC4) being sequentially read under the control of said second timing system (T2, T4);

a fifth memory (M3, M8) with storage capacity equal to a frame, which stores, at addresses represented by the contents of said fourth memory (AC2, AC4), the information to be presented on an output bus (5) of the information extracting means, the contents of the fifth memory being sequentially read under the control of the second timing system;

a sixth memory (M4, M9) which stores, at addresses supplied by the fourth memory (AC2, AC4), service information which is to be processed by the control unit (CM, CT), said sixth memory being written during the phases in which the fifth memory is read, and being read during the phases in which the fifth memory is written.

2. Equipment according to claim 1, characterized in that said control unit (CM, CT) is connected to the means for inserting and extracting the information into and from the frames through an interface device (IC1, IC2) communicating with the control unit (CM, CT) in an asynchronous way, while the dialogue with said inserting and extracting means is controlled by the first and second timing system, respectively.

3. Equipment according to claims 1 or 2, characterized in that, for systems wherein the satellite is equipped for on-board switching with an on-board switching unit (SM) that is controlled by one (MS) of the earth stations (master station), the control unit (CM) of the master station (MS) is connected to said input and output buses (1, 5) through means (PS1, PS3) extracting from the information present on said buses (1, 5) the line signalling to be processed in said control unit and through means (SP1, SP3) inserting into said information the processed signalling to be sent to other stations (TSa1 ... TSnm) or to a terrestrial network (RT), and comprises:

means (L2a L2b) checking the formal correctness of the signalling received and inserting codes for the check of said formal correctness into the signalling to be transmitted;

signalling processing means (L4M) connected on one side to the means (L2a, L2b) for checking the formal correctness and on the other side to an internal bus (6) of the control unit (CM), which means extract from said signalling the parameters of a connection to be established or released and emit the information interesting the points of origin and/or destination;

means (DA) for searching a route through the on-board switching unit (SM), which are associated with a memory (M5) containing the information on the existing connections and which receive the parameters of the connections to be established or released from the signalling processing means (L4M) and emit the connection commands for the on-board switching unit (SM) when it is possible to establish a bidirectional communication path between the stations to which the points of origin and destination of the call are connected;

means (SC) for sending to said third memory (M2) commands for the on-board switching unit and for sending to said third memory (M2) and receiving from said sixth memory (M4) information relating to the acquisition and maintenance of the general synchronism of the communication system;

a terminal (TE1) for the introduction into said first and fourth memories (AC1, AC2) of the system initialization or reconfiguration data and for the system supervision.

4. Equipment according to any of claims 1 to 3, characterized in that the control unit of each of the stations (TSa1 ... TSm) which are not to control the switching unit (traffic stations) comprises means (ST) for sending to said third memory (M7) and receiving from said sixth memory (M9) information relevant to the acquisition and maintenance of the synchronism of the station, and a terminal (TE2) for introducing into said first and fourth memory (AC3, AC4) the initialization or reconfiguration date of the station (TSa1 ... TSnm) and for the station supervision.

5. Equipment according to claim 3, or to claim 4 when appended to claim 3, characterized in that said means (SC) for sending commands for the on-board switching unit (SM) and for sending and receiving information relating to the acquisition and maintenance of the general synchronism is apt to generate, for the synchronism management, a first bit pattern (BCR) for the recovery of the bit carrier, a second bit pattern (LUW) typical of the emitting station, a third bit pattern (ULOLSC) which contains information relevant to the distance between the master station and the satellite, and pointing data of the master station antenna, and receives a fourth bit pattern, which identifies the beginning of a frame, a fifth pattern (DLOLSC) consisting of the third pattern broadcast by the satellite (SA) and a sixth pattern (LBSC) which identifies the instant of beginning of the reception, on-board the satellite, of an emission by the station which said device (SC) is part of, said fourth bit pattern being present only at the beginning of each frame, and the others being present in all the time windows allotted to the station.

6. Equipment according to claims 4 and 5, characterized in that the means (ST) for sending to said third memory (M7) and receiving from said sixth memory (M9) information relevant to the acquisition and maintenance of the synchronism of the station is apt to generate said first and second patterns (BCR, LUW) and to receive said fourth, fifth and sixth patterns (RUW, DLOLSC, LBSC).

7. Equipment according to any of the previous claims, characterized in that, for a communication system in which the on-board switching unit (SM) comprises frame memorization stages, the second and fifth memories (M1, M3, M6, M8) are apt to store the contents of frames with a duration of 500 µs, the number of time slots into which the window allotted to a station within the frame is divided being possibly different according to whether the station is a master station (MS) or a traffic station (TSa1 ... TS nm).

**Patentansprüche**

1. Basisbandanlage für Erdfunkstellen eines mit Vielfachzugriff im Zeitmultiplex arbeitenden Satellitenübertragungssystems, bei dem die Übertragung von und zu Erdfunkstellen, die eine gemeinsame Verbindungsstrecke zum Satelliten ausnützen, der mit einer Bord-Zeitsteuerung ausgestattet ist, in Rahmen von fester Dauer organisiert ist, in denen jeder Funkstelle eine Zeitlage zugeordnet ist, die in teilweise für Dienstinformation und teilweise für tatsächlichen Verkehr vorgesehene Zeitschlitze unterteilt ist, wobei das Senden der Rahmen zum Satelliten und der Empfang der Rahmen vom Satelliten an jeder Erdfunkstelle von einem ersten Zeitsteuersystem (T1, T3) und einem zweiten Zeitsteuersystem (T2, T4) gesteuert sind, von denen das zweite System an die Zeitsteuerung an Bord gekettet ist, und die Basisbandanlagen für die Erdfunkstellen vom ersten Zeitsteuersystem (T1, T3) gesteuerte Schaltungen (BT1, BT2, ACl, AC3, PS2, PS4) zum Einsetzen der zu sendenden Information in die Rahmen und vom zweiten Zeitsteuersystem (T2, T4) gesteuerte Schaltungen (BR1, BR2, AC2, AC4, SP2, SP4) zum Extrahieren der Information aus den empfangenen Rahmen sowie eine Steuereinheit (CM, CT), die mit den die Information einsetzenden und extrahierenden Schaltungen sowie mit dem ersten Zeitsteuersystem (T1, T3) verbunden ist und wenigstens die auf das Erzielen und die Aufrechterhaltung der Synchronisation zwischen der Erdfunkstelle, zu der sie gehört, und dem Satelliten bezogenen Operationen steuert, umfassen, dadurch gekennzeichnet, daß die Schaltungen (BT1, BT2, AC1, AC3, PS2, PS4) zum Einsetzen der Information in die Rahmen folgende Einzelschaltungen umfassen:
einen ersten Speicher (ACl, AC3), in den die Steuereinheit (CM, CT) Daten schreibt, welche angeben, ob die verschiedenen Zeitschlitze in der Sende-Zeitlage der Erdfunkstelle der Dienstinformation oder dem Verkehr zugeordnet sind, sowie Daten, die sich auf die Assoziation zwischen den Verkehrs-Zeitschlitzen und den verschiedenen Kommunikationen beziehen, wobei dieser Speicher zyklisch unter der Steuerung durch das erste Zeitsteuersystem (T1, T3) gelesen wird;
einen zweiten Speicher (M1, M6) mit einer Speicherkapazität gleich einem vollen Rahmen, in den in Aufeinanderfolge unter der Steuerung durch das erste Zeitsteuersystem (T1, T3) die an einer Eingangs-Sammelleitung (1, 9) der die Information in die Rahmen einfügenden Schaltungen (BT1, BT2, AC1, AC3, PS2, PS4) vorliegende Information geschrieben wird, wobei die Leseadressen für diesen zweiten Speicher (M1, M6) aus dem Inhalt des ersten Speichers (AC1, AC3) bestehen;
einen dritten Speicher (M2, M7), der zumindest die sich auf die Synchronisation der Erdfunkstelle (MS, TSa1, ..., TSnm) mit dem Satelliten beziehende Information, die von der Steuereinheit (CM, CT) geliefert wird, speichert, wobei in diesen dritten Speicher (M2, M7) geschrieben und aus ihm gelesen wird, während aus dem zweiten Speicher (M1, M6) gelesen bzw. in ihn geschrieben wird, und er wähend des Lesens durch den ersten Speicher (AC1, AC3) adressiert wird;
und daß die Schaltungen (BR1, BR2, AC2, AC4, SP2, SP4) zum Extrahieren der Information aus den Rahmen folgende Einzelschaltungen umfassen:
einen vierten Speicher (AC2, AC4), in den die Steuereinheit (CM, CT) Daten schreibt, welche angeben, ob die verschiedenen Zeitschlitze innerhalb der Empfangs-Zeitlage der Dienstinformation oder dem Verkehr zugeordnet sind, sowie Daten, die sich auf die Assoziation zwischen den verschiedenen Kommunikationen und den Verkehrs-Zeitschlitzen beziehen, wobei dieser vierte Speicher (AC2, AC4) aufeinanderfolgend unter der Steuerung durch das zweite Zeitsteuersystem (T2, T4) gelesen wird;
einen fünften Speicher (M3, M8) mit einer Speicherkapazität gleich einem Rahmen, der an Adressen, die durch den Inhalt des vierten Speichers (AC2, AC4) wiedergegeben werden, die an einer Ausgangs-Sammelleitung (5) der die Information extrahierenden Schaltungen zu präsentierende Information speichert, wobei der Inhalt des fünften Speichers aufeinanderfolgend unter der Steuerung durch das zweite Zeitsteuersystem gelesen wird;
einen sechsten Speicher (M4, M9), der an vom vierten Speicher (AC2, AC4) gelieferten Adressen Dienstinformation speichert, die von der Steuereinheit (CM, CT) zu verarbeiten ist, und in den während der Phasen, in denen im fünften Speicher gelesen wird, geschrieben wird und aus dem während der Phasen, in denen in den fünften Speicher geschrieben wird, gelesen wird.

2. Anlage nach Anspruch 1, dadurch gekennzeichnet, daß die Steuereinheit (CM, CT) mit den Schaltungen zum Einsetzen und zum Extrahieren der Information in die bzw. aus den Rahmen über eine Schnittstellenvorrichtung (IC1, IC2) verbunden ist, die mit der Steuereinheit (CM, CT) in asynchroner Weise kommuniziert, während der Dialog mit den einsetzenden und den extrahierenden Schaltungen durch das erste bzw. das zweite Zeitsteuersystem gesteuert ist.

3. Anlage nach Anspruch 1 oder 2, dadurch gekennzeichnet, daß für Systeme, bei denen der Satellit zum Koppeln an Bord mit einer an Bord befindlichen Schalteinheit (SM), die von einer der Erdfunkstellen (Leitstation) gesteuert ist, ausgestattet ist, die Steuereinheit (CM) der Leitstation (MS) mit den Eingangs- und Ausgangs-Sammelleitungen (1, 5) über Schaltungen (PS1, PS3), die aus der auf den Sammelleitungen (1, 5) vorhandenen Informationen die in der Steuereinheit zu verarbeitende Leitungssignalisierung herausziehen, und über Schaltungen (SP1, SP3), die in diese Information die an die anderen Erdfunkstellen (TSa1, ..., TSnm) oder an die Erd-Netz (RT) zu sendenden verarbeiteten Signalisierungen einsetzen, verbunden ist und folgende Einzelschaltungen umfaßt:

Schaltungen (L2a, L2b), die die formale Richtigkeit der empfangenen Signalisierungen prüfen und Kodes für die Überprüfung der formalen Richtigkeit in die zu sendenden Signalisierungen einfügen;

Signalisierungsverarbeitungsschaltungen (L4M), die einerseits mit den Schaltungen (L2a, L2b) zum Überprüfen der formalen Richtigkeit und andererseits mit einer internen Sammelleitung (6) der Steuereinheit (CM) verbunden sind, und die aus den Signalisierungen die Parameter einer herzustellenden oder auszulösenden Verbindung herausziehen und die die Ursprungspunkte und/oder die Zielpunkte betreffenden Informationen abgeben;

Schaltungen (DA) zur Wegesuche durch die an Bord befindliche Schalteinheit (SM), die mit einem Speicher (M5) verbunden sind, der die Informationen über die existierenden Verbindungen enthält, und die die Parameter der herzustellenden oder auszulösenden Verbindungen von den die Signalisierungen verarbeitenden Schaltungen (L4M) empfangen und die Verbindungsbefehle für die an Bord befindliche Schalteinheit (SM) abgeben, wenn es möglich ist, einen bidirektionalen Verbindungsweg zwischen den Erdfunkstellen, mit denen die Ursprungspunkte und die Zielpunkte des Gesprächs verbunden sind, herzustellen;

Schaltungen (SC) zum Senden von Befehlen für die an Bord befindliche Schalteinheit an den dritten Speicher (M2) und zum Senden und Empfangen von Information, die sich auf die Herstellung und Aufrechterhaltung der allgemeinen Synchronisation des Kommunikationssystems beziehen, an den dritten Speicher (M2) bzw. vom sechsten Speicher (M4);

ein Endgerät (TE1) zum Einfügen von System-Inbetriebnahme- oder -Rekonfigurations-Daten in den ersten und den vierten Speicher (AC1, AC2) und für die Systemüberwachung.

4. Anlage nach einem der Ansprüche 1 bis 3, dadurch gekennzeichnet, daß die Steuereinheit jeder der Erdfunkstellen (TSa1, ..., TSnm), die nicht die Schalteinheit steuern sollen (Verkehrsstationen), Schaltungen (ST), die an den dritten Speicher (M7) Informationen senden und vom sechsten Speicher (M9) Informationen empfangen, die sich auf die Herstellung und Aufrechterhaltung der Synchronisation der Erdfunkstelle beziehen, sowie eine Endstelle (TE2) zum Einfügen der Inbetriebnahme- oder Rekonfigurations-Daten der Erdfunkstelle (TSa1, ..., TSnm) in den ersten und den vierten Speicher (AC3, AC4) und für die Erdfunkstellenüberwachung umfaßt.

5. Anlage nach Anspruch 3 oder nach dem auf Anspruch 3 rückbezogenen Anspruch 4, dadurch gekennzeichnet, daß die Schaltung (SC) zum Senden von Befehlen für die an Bord befindliche Schalteinheit (SM) und zum Senden und Empfangen von Information über die Herstellung und Aufrechterhaltung der Synchronisation für die Synchronismusverwaltung ein erstes Bitmuster (BCR) für die Wiederherstellung des Bitträgers, ein zweites Bitmuster (LUW), das für die sendende Erdfunkstelle charakteristisch ist, ein drittes Bitmuster (ULOLSC), das auf den Abstand zwischen der Leitstation und dem Satelliten bezogene Informationen enthält und Richtungsdaten der Antenne der Leitstation erzeugt, und ein viertes Bitmuster, das den Beginn eines Rahmens identifiziert, ein fünftes Bitmuster (DLOLSC), das aus dem vom Satelliten (SA) gesendeten dritten Bitmuster besteht, und ein sechstes Bitmuster (LBSC), das den Zeitpunkt des Beginns des an Bord des Satelliten stattfindenden Empfangs einer Emission durch die Erdfunkstelle, zu der diese Schaltung (SC) gehört, identifiziert, empfängt, wobei das vierte Bitmuster nur zu Beginn jedes Rahmens vorliegt und die anderen Bitmuster in sämtlichen der Erdfunkstelle zugeordneten Zeitlagen vorliegen.

6. Anlage nach den Ansprüchen 4 und 5, dadurch gekennzeichnet, daß die Schaltung (ST) zum Senden der für die Herstellung und Aufrechterhaltung der Synchronisation der Erdfunkstelle zum dritten Speicher (M7) und zu deren Empfang vom sechsten Speicher (M9) das erste und das zweite Bitmuster (BCR, LUW) erzeugen und das vierte, das fünfte und das sechste Bitmuster (RUW, DLOLSC, LBSC) empfangen kann.

7. Anlage nach einem der vorhergehenden Ansprüche, dadurch gekennzeichnet, daß für ein Übertragungssystem, bei dem die an Bord befindliche Schalteinheit (SM) Rahmenspeicherstufen umfaßt, der zweite und der dritte Speicher (M1, M3, M6, M8) die Inhalte der Rahmen mit einer Dauer von 500 µs speichern können, wobei die Zahl der Zeitschlitze, in die die einer Erdfunkstelle innerhalb eines Rahmens zugeordnete Zeitlage eingeteilt ist, unterschiedlich im Hinblick darauf sein können, ob die Erdfunkstelle eine Leitstation (MS) oder eine Verkehrsstation (TSa1, ..., TSnm) ist.

## Revendications

1. Appareillage en bande de base pour stations terrestres d'un système de transmission par satellite à accès multiple par répartition dans le temps, où la transmission en provenance de ou vers des stations auxquelles on a affecté une même voie de communication avec le satellite, qui est pourvu d'un horloge de bord, est organisée en trames de durée fixe où à chaque station on a assigné une fenêtre de temps subdivisée en des intervalles assignés en partie à des informations de service et en partie au trafic réel, la transmission des trames vers le satellite et la réception des trames provenant du satellite étant réglées à chaque station par un premier (T1, T3) et un deuxième (T2, T4) système de synchronisation, le deuxième système étant asservi à l'horloge de bord et l'appareillage en bande de base pour les stations terrestres comprenant des moyens (BT1, BT2, AC1, AC3, PS2, PS4), commandés par le premier système de synchronisation, pour l'insertion dans les trames des informations à transmettre, des moyens (BR1, BR2, AC2, AC4, SP2, SP4), commandés par le deuxième système de synchronisation (T2, T4), pour prélever les informations des trames reçues, et une unité de commande (CM, CT) qui est connectée aux moyens d'insertion et de prélèvement des informations et au premier système de synchronisation (T1, T3), et qui gère au moins les opérations qui se réfèrent à l'acquisition et au maintien du synchronisme entre la station d'appartenance et le satellite; caractérisé en ce que les moyens (BT1, BT2, AC1, AC3, PS2, PS4) pour l'insertion des informations dans les trames comprennent:

une première mémoire (AC1, AC3) où l'unité de commande (CM, CT) écrit des données concernant l'affectation aux informations de service ou au trafic des divers intervalles de temps dans la fenêtre de transmission de la station, et des données concernant l'affectation des intervalles de temps de trafic aux communications, ladite memoire étant lue cycliquement d'après la commande du premier système de synchronisation (T1, T3);

une deuxième mémoire (M1, M6) avec une capacité de mémorisation égale à une trame entière, dans laquelle l'on écrit en séquence, sous la commande du premier système de synchronisation (T1, T3), les informations présentes sur un bus (1, 9) d'entrée des moyens (BT1, BT2, AC1, AC3, PS2, PS4) pour l'insertion des informations dans les trames, les adresses de lecture pour ladite deuxième mémoire (M1, M6) étant constituées par le contenu de ladite première mémoire (AC1, AC3);

une troisième mémoire (M2, M7) qui mémorise au moins les informations relatives à la synchronisation de la station (MS, TSa1 ... TSnm) avec le satellite, fournies par l'unité de commande (CM, CT), ladite troisième mémoire (M2, M7) étant écrite et lue respectivement pendant la lecture et l'écriture de la deuxième mémoire (M1, M6), et étant adressée, pendant la lecture, par la première mémoire (C1, AC3);

et en ce que lesdits moyens (BR1, BR2, AC2, AC4, SP2, SP4) d'extraction des informations des trames comprennent:

une quatrième mémoire (AC2, AC4) dans laquelle l'unité de commande (CM, CT) écrit des données qui se réfèrent à l'affectation aux informations de service ou au trafic des divers intervalles de temps dans la fenêtre de réception, et des données relatives à l'affectation des intervalles de temps de trafic aux diverses communications, ladite quatrième mémoire (AC2, AC4) étant lue en séquence sous la commande dudit deuxième système de synchronisation (T2, T4);

une cinquième mémoire (M3, M8), ayant une capacité de mémorisation égale au contenu d'une trame, qui mémorise, à des adresses représentées par le contenu de la quatrième mémoire (AC2, AC4), les informations à présenter sur un bus de sortie (5) des moyens de prélèvement des informations, le contenu de la cinquième mémoire étant lu en séquence sous la commande du deuxième système de synchronisation;

une sixième mémoire (M4, M9), qui mémorise, à des adresses fournies par la quatrième mémoire (AC2, AC4), des informations de service à traiter par l'unité de commande (CM, CT), la sixième mémoire étant écrite dans les phases où la cinquième mémoire est lue, et étant lue pendant les phases où l'on écrit dans la cinquième mémoire.

2. Appareillage suivant la revendication 1, caractérisé en ce que l'unité de commande (CM, CT) est connectée aux moyens d'insertion des informations dans les trames et de prélèvement des informations des trames à travers un dispositif d'interface (IC1, IC2) qui dialogue avec l'unité de commande (CM, CT) de manière asynchrone, tandis que le dialogue avec les moyens d'insertion et prélèvement est contrôlé respectivement par le premier et par le deuxième système de synchronisation.

3. Appareillage suivant les revendications 1 ou 2, caractérisé en ce que, pour des systèmes dans lesquels le satellite est équipé, pour la commutation à bord, avec une unité de commutation à bord (SM) qui est commandée par une (MS) des stations terrestres (station principale), l'unité de commande (CM) de la station principale (MS) est connectée aux bus d'entrée (1) et de sortie (5) à l'aide de moyens (PS1, PS3) pour prélever la signalisation de ligne à traiter dans ladite unité de commande des informations présentes sur lesdits bus (1, 5) et à l'aide de moyens (SP1, SP3) pour insérer dans lesdites informations la signalisation traitée destinée à d'autres stations (TSa1 ... TSnm) ou à un réseau terrestre (RT), et comprend:

des moyens (L2a, L2b) qui contrôlent l'exactitude formelle de la signalisation reçue et insèrent dans la signalisation à transmettre des codes pour le contrôle de cette exactitude formelle;

des moyens (L4M) de traitement de la signalisation, connectés d'un côté aux moyens (L2a, L2b) de contrôle de l'exactitude formelle et de l'autre côté a un bus interne (6) de l'unité de commande (CM), ces moyens de traitement prélevant de la signalisation les paramètres d'une connexion à établir ou à terminer et émettant les informations qui intéressent les points d'origine et/ou destination;

des moyens (DA) pour la recherche d'une route à travers l'unité de commutation (SM) à bord, qui sont associés à une mémoire (M5) qui contient les informations sur les connexions existantes, reçoivent les paramètres de la connexion à établir ou à terminer des moyens (L4M) de traitement de la signalisation, et émettent les commandes de connexion pour l'unité de commutation (SM) à bord lorsqu'il est possible d'établir une voie de communication bidirectionnelle entre les stations auxquelles les points d'origine et destination de l'appel sont connectés;

des moyens (SC) pour l'envoi à la troisième mémoire (M2) des commandes pour l'unité de commutation à bord et pour l'envoi à la troisième mémoire (M2) et la réception de la sixième mémoire (M4) d'informations relatives à l'acquisition et au maintien du synchronisme général du système de communication;

un terminal (TE1) pour l'introduction dans la première et quatrième mémoire (AC1, AC2) des données d'initialisation ou de reconfiguration du système et pour sa supervision.

4. Appareillage suivant l'une quelconque des revendications 1 à 3, caractérisé en ce que l'unité de commande de chacune des stations (TSa1 ... TS nm) qui n'ont pas de tâches de commande de l'unité de commutation (stations de trafic) comprend des moyens (ST) pour envoyer à ladite troisième mémoire (M7) et recevoir de ladite sixième mémoire (M9) des informations relatives à l'acquisition et au maintien du synchronisme de la station, et un terminal (TE2) pour l'introduction dans la première et quatrième mémoire (AC3, AC4) des données d'initialisation ou de reconfiguration de la station (TSa1 ... TSnm) et pour sa supervision.

5. Appareillage suivant la revendication 3 ou la revendication 4 lorsqu'elle est rattachée à la revendication 3, caractérisé en ce que lesdits moyens (SC) pour l'envoi des commandes pour l'unité de commutation de bord (SM) et pour l'envoi et la réception d'informations concernant l'acquisition et le maintien du synchronisme général sont aptes à engendrer, pour la gestion du synchronisme, une première séquence de bits (BCR) pour récupérer la porteuse de bit, une deuxième séquence (LUW), spécifique à la station émettrice, une troisième séquence (ULOLSC) qui contient des informations relatives à la distance entre la station principale et le satellite et des données de pointage de l'antenne de la station principale, et à recevoir une quatrième séquence de bits qui identifie le commencement d'une trame, une cinquième séquence (DLOLSC), constituée par la troisième séquence rediffusée par le satellite (SA), et une sixième séquence (LBSC) qui identifie l'instant de début de la réception, à bord du satellite, d'une émission par la station dont lesdits moyens (SC) font partie, la quatrième séquence de bits étant présente seulement au commencement de chaque trame, et les autres étant présentes dans toutes les fenêtres de temps assignées à la station.

6. Appareillage suivant les revendications 4 et 5, caractérisé en ce que les moyens (ST) pour l'envoi à ladite troisième mémoire (M7) et la réception de ladite sixième mémoire (M9) des informations relatives à l'acquisition et au maintien du synchronisme de la station sont aptes à engendrer la première et deuxième séquence (BCR, LUW) et à recevoir la quatrième, cinquième et sixième séquence (RUW, DLOLSC, LDSC).

7. Appareillage suivant l'une quelconque des revendications précédentes, caractérisé en ce que, pour un système de communication dans lequel l'unité de commutation à bord (SM) comprend des étages de mémorisation des trames, la deuxième et la cinquième mémoire (M1, M3, M6, M8) sont aptes à mémoriser le contenu de trames ayant une durée de 500 µs, le nombre des intervalles de temps dans la fenêtre réservée à une station déterminée à l'intérieur de la trame pouvant être différent suivant que la station est une station principale (MS) ou une station de trafic (TSa1 ... TSnm).

EP 0 114 678 B1

Fig. 1

Fig. 2

Fig. 3

Fig. 4

Fig. 5

EP 0 114 678 B1

Fig. 6

EP 0 114 678 B1

Fig. 7

Fig. 8